Europäisches Patentamt

European Patent Office

Office européen des brevets

(11) Publication number: **0 080 263**
**B1**

(12) **EUROPEAN PATENT SPECIFICATION**

(45) Date of publication of patent specification: **07.05.86**

(21) Application number: **82305434.1**

(22) Date of filing: **13.10.82**

(51) Int. Cl.⁴: **F 16 D 23/14**

(54) Clutch release bearing assembly.

(30) Priority: **13.11.81 GB 8134304**
**17.04.82 GB 8211197**

(43) Date of publication of application:
**01.06.83 Bulletin 83/22**

(45) Publication of the grant of the patent:
**07.05.86 Bulletin 86/19**

(84) Designated Contracting States:
**DE FR GB IT**

(56) References cited:
**EP-A-0 044 691**
**FR-A-2 473 142**
**GB-A-2 046 395**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Falconer, Philip**
**6 Barholme Close Upper Newbold**
**Chesterfield (GB)**
Inventor: **Dixon, Alan Geoffrey**
**12 Beaufort Close Wellesbourne**
**Warwick Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to a clutch release bearing assembly for a pull-type friction clutch of a motor vehicle.

A typical motor vehicle friction clutch comprises a driven plate which drives the gearbox input shaft, and which is clamped between the engine flywheel and a pressure plate. The pressure plate is biased towards the flywheel by springs and in order to disengage the clutch driven plate, a clutch release bearing assembly acts on a set of release levers to remove the clamp load of the pressure plate from the driven plate. A pull-type clutch is on in which the clutch release bearing is moved away from the driven plate.

A problem associated with pull-type clutches is that the release bearing assembly must usually be fitted to the release levers prior to fitting the transmission to the engine. Since the release fork is pivoted on the transmission casing and yet must engage with the fitted release bearing assembly in order to be able to move the release bearing assembly away from the driven plate it is sometimes difficult to connect the fork with the release bearing assembly.

The spring providing the clamp load on the driven plate is typically a diaphragm spring. A typical diaphragm spring is frusto-conical in shape and comprises a continuous outer annular portion with a plurality of inwardly projecting fingers. In order to release the clamp load a release load is applied to the radially inner ends of the spring fingers which act as the set of release levers. The release bearing assembly is usually secured to the radially inner ends of the spring fingers prior to assembly of the gearbox in position.

EP—A—0044691 discloses a clutch release bearing assembly of the kind (hereinafter called the kind referred to) for use in a vehicle transmission in which a clutch release fork is mounted on a transmission casing, a pull-type clutch which includes release levers is mounted on an engine flywheel and the release fork is operably connected to the release levers through the release bearing assembly, the release bearing assembly comprising a collar engageable with the release fork, a rolling element bearing connectable to the clutch release levers independently of the collar, a carrier member connected to the non-rotary race of the bearing, the collar and carrier member being axially slidable one relative to the other during assembly of the transmission casing to the engine, and the bearing assembly further comprising latch means which lock the collar and the carrier member together for axial movement of the collar and the carrier member in the direction to release the clutch.

In EP—A—0044691 a latch arrangement is constituted by pivoting fingers on the collar, the fingers forming a detent engaging against an annular shoulder in the inner face of the inner stationary race of the rolling element bearing so that pull force exerted on the collar pulls the rolling element bearing and carrier member away from the driven plate. The fingers each extend axially and are disposed in a circular array at which the detent is expanded radially outwardly into said engagement with the shoulder by a tube passing through the circular array. That tube is mounted on a gearbox casing and surrounds a gearbox input shaft driven by the driven clutch plate. When the gearbox casing is detached from the engine casing the tube can be retracted through the fingers until the end of the tube becomes opposite the recess in the radially inner surface of each finger. This allows a hitherto stretched garter spring passing through the free ends of the fingers to contract radially inwardly thus likewise contracting the detent which can now be pulled past the shoulder so the collar can be completely detached from the rolling element bearing and the carrier member. In such a release bearing assembly the latch arrangement is not accessible from the exterior of the assembly in a manner admitting release of the latch arrangement and should the garter spring fail at least some of the fingers would still engage the abutment when the tube end is opposite the recesses. Thus it would be impossible to separate the collar from the rolling element bearing and the carrier member until the tube was completely clear of the collar and that would require a much greater movement of the gearbox from the engine which can be highly inconvenient.

The invention provides a clutch release bearing assembly in which difficulties associated with connecting the release fork and the release bearing assembly are alleviated.

According to the invention there is provided a clutch release bearing assembly of the kind referred to characterised in that the latch means comprises a detent and a latch spring loaded radially inwardly of the release bearing assembly to come into engagement under the spring loading with the detent, and either

the collar is fittable on the carrier member, and the detent is on the carrier member and the spring loaded latch is on the collar and is accessible from the exterior of the collar for release of the latch from the detent to allow the collar when fitted on and locked to the carrier member to be removed from the carrier member without the need for removal of a pull-type clutch from a flywheel when the clutch including said release bearing assembly is mounted on the flywheel, or

the collar is fittable in the carrier member, and the detent is on the collar and the spring loaded latch is on the carrier member and is accessible from the exterior of the carrier member for release of the latch from the detent to allow the collar when fitted in and locked to the carrier member to be removed from the carrier member without the need for removal of a pull-type clutch from a flywheel when the clutch including said release bearing assembly is mounted on said flywheel.

The invention will now be further described, by way of example, with reference to the accompanying drawings in which:—

Fig. 1 is a longitudinal section through a clutch release bearing assembly according to the invention, showing also the release fork in elevation and the diaphragm spring fingers;

Fig. 2 is a section on the line II—II of Fig. 1;

Fig. 3 is a view of the bearing assembly in the direction of arrow A in Fig. 1; and

Fig. 4 is a longitudinal section similar to Fig. 1 showing an alternative clutch release bearing assembly according to the invention.

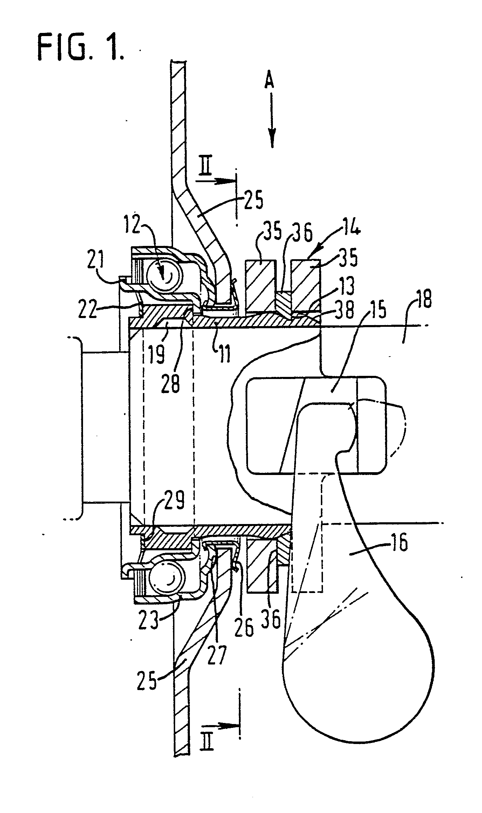

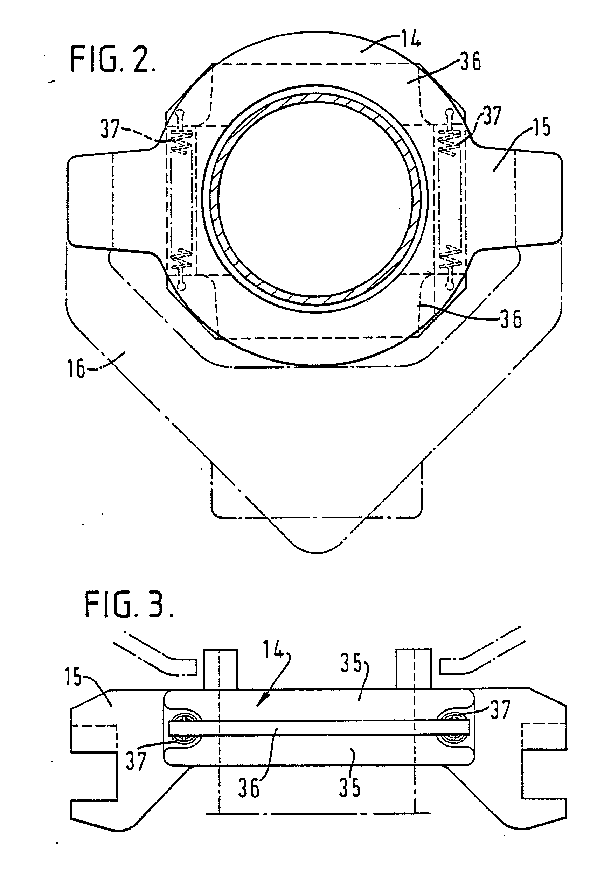

With reference to Figs. 1 to 3, the clutch release bearing assembly shown is for a pull-type clutch mounted on an engine flywheel and in which in order to release the clutch driven plate (not shown) a set of release levers in the form of diaphragm spring fingers 25 is moved to the right of Fig. 1, away from the engine flywheel.

The release bearing assembly comprises a carrier member in the form of a sleeve 11 having a rolling element release bearing 12 fixed to one end of the sleeve 11 and a detent in the form of a circumferential groove 13 on its radially outer surface at the other end. An annular collar 14 is axially slidable over the said other end portion of the sleeve 11 and has outwardly radially projecting diametrically opposed lugs 15 on its outer periphery for engagement with the ends of a clutch release fork 16 pivoted to the transmission casing (not shown).

The sleeve 11 is slidable on a guide 18 which is typically a tube surrounding the input shaft. The internal surface of the sleeve 11 has a grease groove 19 therein. The bearing 12 at the one end of the sleeve 11 is located on the driven plate side of the diaphragm spring fingers 25 and is secured to the sleeve through its non-rotary race 21 being held in abutment with a shoulder 28 on the sleeve by a clip 22 acting on an oppositely directed shoulder 29.

The rotary race 23 is fixed to the spring fingers 25 by another clip 26 and an extension of the rotary race is provided with a curved surface 27 for pivotal movement with the spring fingers 25. The sleeve 11 extends axially through the centre of the spring fingers 25, there being sufficient radial clearance between the bearing non-rotary race 21 and the sleeve 11 to accommodate radial re-alignment of the bearing 12 to the sleeve 11.

The collar 14 comprises an annular carrier of two co-axial spaced annular parts. 35 joined together through the lugs 15. A pair of radially slidable shutter plates 36 are located in the space between the parts 35 and are arranged on diametrically opposite sides of the collar 14.

The two shutter plates 36 are joined together by a pair of tension springs 37 located one at each pair of adjacent ends of the shutter plates and which bias the shutter plates towards one another radially inwardly of the release bearing assembly. The tension springs 37 are located in recesses in the collar parts 35. The radially inner edges of the two shutter plates 36 are chamfered to co-operate with a chamfer 38 on the external surface of the sleeve member 11.

The bearing 12 and sleeve member 11 are fitted to the fingers 25 of the diaphragm spring and the collar 14 is fitted onto the clutch release fork 16 prior to fitting the transmission to the engine. The gearbox tube 18 is passed through the centre of the sleeve 11 and the collar 14 fed over the sleeve 11 until the shutter plates 36 contact the chamfer 38 on the end of the sleeve 11. Further axial movement of the transmission casing causes the shutter plates 36 to move radially outwards and ride up the chamber 38 and then eventually under the bias of the springs 37 to latch with the detent groove 13. During this relative axial movement between the collar 14 and the sleeve 11, the sleeve is held axially in position relative to the spring fingers 25 by the clips 22 and 26 and the bearing 12.

During regular operation of the clutch, to release the clutch driven plate the fork 16 is rotated clockwise as seen in Fig. 1 about its pivot P, and the shutter plates 36 engage the detent groove 13 to transfer the release load to the sleeve 11 and bearing 12 and pull the ends of the fingers to the right of Fig. 1, the shutter plates 36 and groove 13 thus acting as latch means which lock the collar 14 and sleeve 11 together for axial movement of the collar in the direction to release the clutch.

If it is subsequently desired to separate the transmission casing from the vehicle engine, for example to repair the clutch, the release fork 16 pivots anti-clockwise as seen in Fig. 1 and becomes disengaged from the lugs 15 on the collar 14 as the transmission moves away. From the exterior of the collar 14 a suitable tool has access between the parts 35 to each shutter plate 36 moving them from the detent 13 so that the collar can then be removed from the sleeve member 11 and placed onto the release fork 16 for subsequent re-assembly.

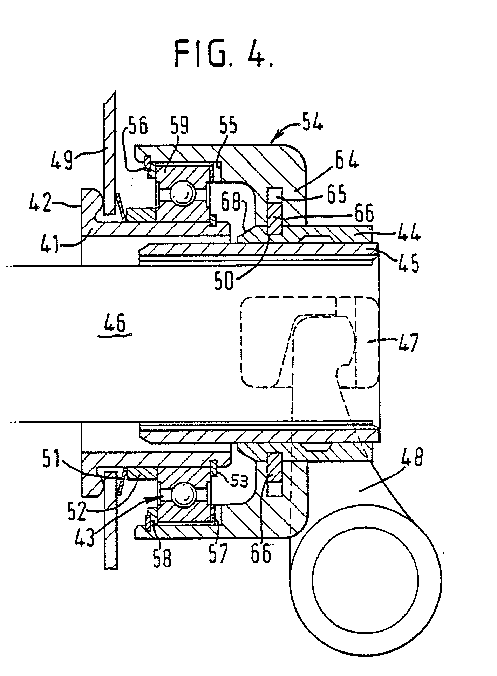

The clutch release bearing assembly shown in Fig. 4 comprises a sleeve 41 having an outwardly projecting radial flange 42 at one end thereof, and has a rolling element bearing 43 secured to its other end portion. An annular collar 44 is axially slidable on a guide comprising a tube 45 surrounding a gearbox input shaft 46. The collar 44 has a pair of diametrically opposed lugs 47 on its outer periphery for engagement with the ends of a clutch release fork 48 pivoted to the transmission casing (not shown). The end portion of the collar 44 adjacent to the bearing 43 has a detent in the form of an annular groove 50 in its outer peripheral surface.

The flange 42 is located on the driven plate side of the clutch diaphragm spring fingers 49 and is held in place by a Belleville spring 51 which reacts against an abutment ring 52 on the sleeve 41. The rotary race of the bearing 43 is secured to the other end of the sleeve 41 and is held in position against the other side of the ring 52 to the spring 51, by a circlip 53. The non-rotary race 59 of the bearing 43 is held by a circlip 56 against a shoulder 55 within the mouth of a cup shaped carrier member 54. A spring washer 57 biases the bearing outer race towards the circlip 56 which is abutted by an L section ring 58.

The base 64 of the cup shaped carrier member 54 has a bore through which the input shaft 46, tube 45, and surrounding collar 44, all pass. A pair of radially slidable shutter plates 66 is located in an annular groove 65 which projects radially outwards from the inner surface of the bore in the base 64 and are arranged on diametrically opposite sides of the collar 44. The two shutter plates 66 are joined together by a pair of tension springs (not shown) located one at each pair of adjacent ends of the shutters and which bias the shutters together. The springs are located in recesses in the base 64 of the carrier member 54. The tension springs and shutter plates 66 are generally as the tension springs 37 and shutter plates 36 described with reference to Figs. 1 to 3.

The end of the collar 44 adjacent to the bearing 43 has a chamfer 68 to co-operate with the shutter plates 66 when the transmission is mated with the engine.

When the transmission casing is offered up to the vehicle engine the bearing 43, sleeve 44 and carrier member 54 have all been previously fitted to the fingers 49 of the diaphragm spring, and the collar 44 has been previously fitted onto the clutch release fork 58. The gearbox input shaft 46 and tube 45 are passed through the bore in the base 64 of the carrier member 54 and the collar 44 is fed through the carrier member until the shutter plates 66 contact the chamfer 68 on the collar. Further axial movement of the transmission casing causes the shutter plates 66 to move radially outwards and ride up the chamfer 68 and then eventually under the bias of the tension springs to latch into the detent groove 50 on the collar 44. During this relative axial movement between the collar 44 and the carrier member 54, the carrier member is held axially in position relative to the spring fingers 49 by the ring 52, clip 56, and Belleville spring 51.

During regular operation of the clutch, to release the clutch driven plate the fork 48 is rotated clockwise relative to Fig. 4 about its pivot P, and the shutter members 66 engage the detent groove 50 to transfer the release load to the bearing 43 and sleeve 41 so as to pull the ends of the fingers 49 towards the right of Fig. 4, the shutter plates 66 and groove 50 thus acting as latch means which lock the collar 44 and carrier member 54 together for axial movement of the collar in the direction to release the clutch.

If it is subsequently desired to separate the transmission casing and the vehicle engine, for example to repair the clutch, the release fork 48 is allowed to pivot anti-clockwise and disengage from the lugs 47 on the collar as the transmission casing moves away. The collar 44 can be removed from the carrier member 54 by use of a suitable tool applied to the shutter plates 66 from the exterior of the collar to release them from the detent groove 50. The removed collar 44 can then be placed onto the release fork 48 for subsequent re-assembly.

**Claims**

1. A clutch release bearing assembly for use in a vehicle transmission in which a clutch release fork (16, 48) is mounted on a transmission casing, a pull-type clutch which includes release levers (25, 49) is mounted on an engine flywheel and the release fork (16, 48) is operably connected to the release levers (25, 49) through the release bearing assembly, the release bearing assembly comprising a collar (14, 44) engageable with the release fork (16, 48), a rolling element bearing (12, 43) connectable to the clutch release levers (25, 43) independently of the collar (14, 44), a carrier member (11, 54) connected to the non-rotary race (21, 59) of the bearing (12, 43), the collar (14, 44) and carrier member (11, 54) being axially slidable one relative to the other during assembly of the transmission casing to the engine, and the bearing assembly further comprising latch means (36, 13; 66, 50) which lock the collar (14, 44) and the carrier member (11, 54) together for axial movement of the collar (14, 44) and the carrier member (11, 54) in the direction to release the clutch, characterised in that the latch means comprises a detent (13, 50) and a latch (36, 66) spring loaded radially inwardly of the release bearing assembly to come into engagement under the spring loading with the detent, and either

the collar (14) is fittable on the carrier member (11), and the detent (13) is on the carrier member (11) and the spring loaded latch (36) is on the collar (14) and is accessible from the exterior of the collar for release of the latch from the detent to allow the collar (14) when fitted on and locked to the carrier member (11) to be removed from the carrier member without the need for removal of a pull-type clutch from a flywheel when the clutch including said release bearing assembly is mounted on the flywheel, or

the collar (44) is fittable in the carrier member (54), and the detent (50) is on the collar (44) and the spring loaded latch (66) is on the carrier member (54) and is accessible from the exterior of the carrier member for release of the latch from the detent to allow the collar (44) when fitted in and locked to the carrier member (54) to be removed from the carrier member without the need for removal of a pull-type clutch from a flywheel when the clutch including said release bearing assembly is mounted on said flywheel.

2. A release bearing assembly according to Claim 1, characterised in that the detent comprises a circumferential groove (13, 50) and the latch comprises a radially slidable shutter plate (36, 66).

3. A release bearing assembly according to Claim 2, characterised in that a plurality of shutter plates (36, 66) is biassed into engagement with the groove (13, 50) by springs (37) acting between adjacent pairs of shutter plates.

4. A release bearing assembly according to Claim 3, characterised in that two shutter plates (36, 66) are interconnected and spring loaded towards each other by tension springs (37).

**Patentansprüche**

1. Kupplungsausrücklageranordnung zur Verwendung in der Kraftübertragung eines Fahrzeugs, bei der eine Kupplungsausrückgabel (16, 48) an einem Getriebegehäuse angeordnet ist, eine Ziehkupplung mit Ausrückhebeln (25, 49) an einem Motorschwungrad angeordnet ist und die Ausrückgabel (16, 48) über die Ausrücklageranordnung mit den Ausrückhebeln (25, 49) wirkmäßig verbunden ist, wobei die Ausrücklageranordnung einen mit der Ausrückgabel (16, 48) in Eingriff bringbaren Bund (14, 44), ein unabhängig von dem Bund (14, 44) mit den Kupplungsausrückhebeln (25, 49) verbindbares Rollelementenlager (12, 43), ein mit dem nicht drehbaren Ring (21, 59) des Lagers (12, 43) verbindbares Trägerteil (11, 54) aufweist, wobei der Bund (14, 44) und das Trägerteil (11, 54) während des Anbaus des Getriebegehäuses an den Motor axial bezüglich einander verschiebbar sind, und wobei die Lageranordnung ferner eine Verriegelungseinrichtung (36, 13; 66, 50) aufweist, die den Bund (14, 44) mit dem Trägerteil (11, 54) für eine Axialbewegung des Bundes (14, 44) und des Trägerteiles (11, 54) in der Richtung zum Ausrücken der Kupplung verriegelt, dadurch gekennzeichnet, daß die Verriegelungseinrichtung einen Anschlag (13, 50) und einen Riegel (36, 66) aufweist, der radial einwärts zu der Ausrücklageranordnung federbelastet ist, um unter der Federlast in Eingriff mit dem Anschlag zu kommen, und entweder

der Bund (14) auf dem Trägerteil (11) anbringbar ist, und der Anschlag (13) auf dem Trägerteil (11) ist und der federbelastete Riegel (36) auf dem Bund (14) ist und von außerhalb des Bundes zum Lösen des Riegels von dem Anschlag zugänglich ist, um den Bund (14), wenn er auf dem Trägerteil (11) angebracht und mit ihm verriegelt ist, von dem Trägerteil entfernen zu können, ohne eine Ziehkupplung von einem Schwungrad entfernen zu müssen, wenn die Kupplung samt der Ausrücklageranordnung an dem Schwungrad angeordnet ist, oder

der Bund (44) in dem Trägerteil (54) anbringbar ist, und der Anschlag (50) auf dem Bund (44) ist und der federbelastete Riegel (66) auf dem Trägerteil (54) ist und von außerhalb des Trägerteiles zum Lösen des Riegels von dem Anschlag zugänglich ist, um den Bund (44), wenn er in dem Trägerteil (54) angebracht und mit ihm verriegelt ist, von dem Trägerteil entfernen zu können, ohne eine Ziehkupplung von einem Schwungrad entfernen zu müssen, wenn die Kupplung samt der Ausrücklageranordnung an dem Schwungrad angeordnet ist.

2. Ausrücklageranordnung nach Anspruch 1, dadurch gekennzeichnet, daß der Anschlag eine Umfangsnut (13, 50) aufweist und der Riegel eine radial verschiebbare Verschlußplatte (36, 66) aufweist.

3. Ausrücklageranordnung nach Anspruch 2, dadurch gekennzeichnet, daß eine Vielzahl von Verschlußplatten (36, 66) in Eingriff mit der Nut (13, 50) durch Federn (37) vorgespannt ist, die zwischen benachbarten Paaren von Verschlußplatten wirken.

4. Ausrücklageranordnung nach Anspruch 3, dadurch gekennzeichnet, daß zwei Verschlußplatten (36, 66) miteinander verbunden sind und durch Zugfedern (37) gegeneinander federbelastet sind.

**Revendications**

1. Butée de débrayage destinée à être utilisée dans une transmission de véhicule dans laquelle une fourchette de débrayage (16, 48) est montée sur un carter de boîte de vitesses, un embrayage du type à traction qui comprend des leviers de débrayage (25, 49) est monté sur un volant de moteur et la fourchette de débrayage (16, 48) est reliée de manière opérationnelle aux leviers de débrayage (25, 49) par l'intermédiaire de la butée de débrayage, la butée de débrayage comprenant une bague (14, 44) avec laquelle peut venir en prise la fourchette de débrayage (16, 48), un palier à roulement (12, 43) pouvant être relié aux leviers de débrayage (25, 49) indépendamment de la bague (14, 44), un élément de support (11, 54) relié au chemin de roulement non rotatif (21, 59) du palier (12, 43), la bague (14, 44) et l'élément de support (11, 54) pouvant coulisser axialement l'un par rapport à l'autre au cours de l'assemblage du carter de boîte de vitesses sur le moteur, et la butée comprenant en outre des moyens de verrouillage (36, 13; 66, 50) qui solidarisent entre eux la bague (14, 44) et l'élément de support (11, 54) en vue d'un mouvement axial de la bague (14, 44) et de l'élément de support (11, 54) suivant la direction permettant de débrayer, caractérisée en ce que les moyens de verrouillage comprennent un arêt (13, 50) et un verrou (36, 66) chargé par ressort radialement vers l'intérieur de la butée de débrayage afin de venir en contact avec l'arrêt sous l'effet de la charge élastique, et soit

— la bague (14) peut être montée sur l'élément de support (11), et l'arrêt (13) est prévu sur l'élément de support (11) et le verrou chargé élastiquement (36) est prévu sur la bague (14) et est accessible de l'extérieur de la bague pour libérer le verrou par rapport à l'arrêt, afin de permettre à la bague (14), lorsqu'elle est montée et bloquée sur l'élément de support (11), d'être retirée par rapport à l'élément de support sans qu'il soit besoin de retirer un embrayage du type à traction par rapport à un volant lorsque l'embrayage comprenant ladite butée de débrayage est monté sur le volant, ou

— la bague (14) peut être montée dans l'élément de support (54), et l'arrêt (50) est situé sur la bague (44) et le verrou chargé élastiquement (66) est situé sur l'élément de support (54) et est accessible de l'extérieur de l'élément de support en vue de la libération du verrou par rapport à l'arrêt, afin de permettre à la bague (44), lorsqu'elle est montée et bloquée dans l'élément de support (54), d'être retirée par rapport à l'élément de support sans qu'il soit besoin de retirer un embrayage du type à traction par rapport à un volant lorsque l'embrayage comprenant ladite butée de débrayage est monté sur ledit volant.

2. Butée de débrayage selon la revendication 1, caractérisée en ce que l'arrêt comprend une gorge circonférencielle (13, 50) et le verrou comprend une plaque volet pouvant coulisser radialement (36, 66).

3. Butée de débrayage selon la revendication 2, caractérisée en ce que plusieurs plaques-volets (36, 66) sont repoussées en position de prise avec la gorge (13, 50) par des ressorts (37) agissant entre des paires adjacentes de plaques-volets.

4. Butée de débrayage selon la revendication 3, caractérisée en ce que deux plaques-volets (36, 66) sont reliées entre elles et chargées élastiquement en direction l'une de l'autre par des ressorts de traction (37).

FIG. 1.

0 080 263

FIG. 2.

FIG. 3.

2

# FIG. 4.